Europäisches Patentamt

European Patent Office

Office européen des brevets

(11) Veröffentlichungsnummer: **0 494 351 A1**

# EUROPÄISCHE PATENTANMELDUNG

(21) Anmeldenummer: **91118961.1**

(22) Anmeldetag: **07.11.91**

(51) Int. Cl.⁵: **B27K 3/50**, B27K 3/38

(30) Priorität: **09.01.91 DE 4100376**

(43) Veröffentlichungstag der Anmeldung:
**15.07.92 Patentblatt 92/29**

(84) Benannte Vertragsstaaten:
**AT BE CH DE DK ES FR GB GR IT LI LU NL SE**

(71) Anmelder: **DESOWAG Materialschutz GmbH
Rossstrasse 76 Postfach 32 02 20
W-4000 Düsseldorf 30(DE)**

(72) Erfinder: **Hellwig, Volker, Dr.
Thiergartenstrasse 15
W-4150 Krefeld 1(DE)**
Erfinder: **Hiller, Johannes Christian, Dr.
Vinhoverweg 50
W-4044 Kaarst 2(DE)**

(74) Vertreter: **Seiler, Siegfried
c/o DEUTSCHE SOLVAY-WERKE GmbH
Langhansstrasse 6 Postfach 11 02 70
W-5650 Solingen 11(DE)**

(54) Mittel oder Konzentrat zum Schutz von Schnittholz gegen holzverfärbende Pilze.

(57) Die vorliegende Erfindung betrifft ein Mittel oder Konzentrat zum Schutz von Schnittholz gegen holzverfärbende Pilze. Es besteht aus einer Mischung von A) o-Phenylphenol und B) 2-Ethylhexansäure in einem
unpolaren und/oder polaren oganisch-chemischen Lösemittel oder Lösemittelgemisch und mindestens einem
Emulgator und/oder Netzmittel gelöst oder in einem Gemisch von Wasser und einem organisch-chemischen
Lösemittel oder Lösemittelgemisch, vorzugsweise in einem unpolaren organisch-chemischen Lösemittel oder
Lösemittelgemisch und mindestens einem Emulgator und/oder Netzmittel gelöst.

EP 0 494 351 A1

Die vorliegende Erfindung betrifft ein Mittel oder Konzentrat zum Schutz von Schnittholz gegen holzverfärbende Pilze.

Feuchtes Holz, insbesondere frisch gesägtes Schnittholz, wird in feuchtem Zustand von holzverfärbenden Pilzen (Bläuepilzen und Schimmelpilzen) befallen, wodurch eine Wertminderung des Holzes hervorgerufen wird. Es ist daher erforderlich, eine Schutzbehandlung des Holzes durchzuführen.

Es ist bereits bekannt (DE-OS 33 08 303), daß 2-Ethylhexansäure eine fungizide Wirksamkeit aufweist. Eigene durchgeführte Versuche ergaben indessen, daß die Wirksamkeit gegen Bläuepilze nicht ausreichend ist.

Es ist weiterhin bekannt, daß o-Phenylphenol (2-Hydroxydiphenyl) wegen seiner Wirksamkeit gegen Schimmelpilze im Materialschutz und in Holzkonservierungsmitteln (DE-OS 30 23 612) eingesetzt wird. Infolge seiner Wasserunlöslichkeit kann es nur in lösungsmittelhaltigen Holzschutzmitteln eingesetzt werden.

In Form der wasserlöslichen Alkalisalze ist es in wäßrigen Holzschutzmitteln einsetzbar. Das Kaliumsalz des o-Phenylphenols ist indesssen nur oberhalb pH 11,5 beständig. Unterhalb dieses pH-Wertes bildet sich das wasserunlösliche o-Phenylphenol zurück, das aus der wäßrigen Holzschutzmittellösung ausfällt.

Beim praktischen Gebrauch wäßriger Holzschutzmittel, die als Wirkstoff das Kaliumsalz des o-Phenylphenols enthalten, in offenen Tränkbecken, wie es zur Schnittholzbehandlung gegen Bläuebefall durch Tauchen allgemein üblich ist, sinkt der pH-Wert durch das $CO_2$ der Luft sowie durch die herausgelösten Inhaltsstoffe des im allgemeinen sauer reagierenden frischen Schnittholzes. Ein Absinken unter den kritischen pH-Wert von 11,5 ergibt daher wegen Wirkstoffausfalls eine Holzschutzmittellösung, die keine ausreichende Schutzwirkung mehr erzeugt.

Der Erfindung liegt die Aufgabe zugrunde, ein Mittel oder Konzentrat auf der Basis von o-Phenylphenol zum Schutz von Holz, insbesondere Schnittholz zur Verfügung zu stellen, das nicht nur keinen Wirkstoffabfall in wäßrigem Medium, sondern auch in geringeren Konzentrationen an o-Phenylphenol gleiche Wirksamkeit aufweist.

Erfindungsgemäß wurde überraschend festgestellt, daß eine Kombination von

A) o-Phenylphenol und

B) 2-Ethylhexansäure

nicht nur eine bessere Wirksamkeit gegen Bläue- und Schimmelpilze bei der Behandlung von feuchtem Holz, insbesondere von frisch gesägtem Schnittholz als die Wirkstoffe allein aufweist, so daß der Wirkstoff o-Phenylphenol bei gleichbleibender Wirksamkeit des Holzschutzmittels in geringerer Menge eingesetzt werden kann, sondern daß 2-Ethylhexansäure auch gleichzeitig als Lösemittel für das o-Phenylphenol wirksam ist. Dadurch ist es möglich, insbesondere wäßrige Emulsionkonzentrate auf der Basis der Wirkstoffkombination 2-Ethylhexansäure/o-Phenylphenol herzustellen, ohne daß ein Wirkungsabfall erfolgt.

Das erfindungsgemäße Mittel oder Konzentrat besteht somit aus einem Gemisch von

A) o-Phenylphenol und

B) 2-Ethylhexansäure

in einem Verhältnis von

10 : 1 bis 1 : 10, vorzugsweise

1 : 1 bis 1 : 2

in einem unpolaren und/oder polaren organisch-chemischen Lösemittel oder Lösemittelgemisch, vorzugsweise einem unpolaren organisch-chemischen Lösemittel oder Lösemittelgemisch und mindestens einem Emulgator und/oder Netzmittel oder in einem Gemisch von Wasser und einem organisch-chemischen Lösemittel oder Lösemittelgemisch, vorzugsweise einem unpolaren organischchemischen Lösemittel oder Lösemittelgemisch und mindestens einem Emulgator und/oder Netzmittel gelöst. Besonders bevorzugt wird ein Verhältnis der beiden Wirkstoffe A) und B) von 1 : 2.

Als unpolare organisch-chemische Lösemittel werden ölige oder ölartige Lösungsmittel wie Mineralöle oder mineralölhaltige Lösungsmittelgemische, Testbenzin, Petroleum und/oder Alkylbenzole, vorzugsweise Aromatenfraktionen der Mineralöle verwendet.

Als polare organisch-chemische Lösemittel werden Amine oder Hydroxyamine eingesetzt.

Als Emulgatoren werden anionische Emulgatoren, vorzugsweise Phosphorsäurepartialester sowie ggf. nichtionogene Emulgatoren oder Emulgatorgemische, vorzugsweise ein eine Seitengruppe enthaltendes ethoxyliertes Phenol, besonders bevorzugt ein ethoxyliertes Nonylphenol verwendet. Das nichtionogene Emulgatorgemisch besteht vorteilhaft aus einem Gemisch von nichtionogenen Emulgatoren unterschiedlicher Kettenlänge, von denen ein Emulgator eine ethoxylierte Seitenkette von weniger als 10 Ethoxygruppen und von denen mindestens ein anderer Emulgator eine ethoxylierte Seitenkette von mehr als 10 Ethoxygruppen besitzt.

Das erfindungsgemäße Konzentrat besteht nach einer Ausführungsform aus

5 bis 60 Gew. %, vorzugsweise

20 bis 40 Gew. %

des Gemisches von

A) o-Phenylphenol und

B) 2-Ethylhexansäure

in einem Verhältnis von

10 : 1 bis 1 : 10, vorzugsweise

1 : 1 bis 1 : 2

und

mehr als 20 Gew. %, vorzugsweise

mehr als 40 Gew. %

eines unpolaren und/oder polaren organisch-chemischen Lösemittels oder Lösemittelgemisches, vorzugsweise eines unpolaren organisch-chemischen Lösemittels oder Lösemittelgemisches, und mindestens einem Emulgator und/oder Netzmittel.

Das erfindungsgemäße Mittel (anwendungsfertige Mittel) enthält nach einer Ausführungsform

40 bis 3 Gew. %, vorzugsweise

10 bis 5 Gew. %

des Konzentrats, bestehend aus

5 bis 60 Gew. %, vorzugsweise

20 bis 40 Gew. %

des Gemisches von

A) o-Phenylphenol und

B) 2-Ethylhexansäure

in einem Verhältnis von

10 : 1 bis 1 : 10, vorzugsweise

1 : 1 bis 1 : 2

und

mehr als 20 Gew. %, vorzugsweise

mehr als 40 Gew. %

eines unpolaren und/oder polaren organisch-chemischen Lösemittels oder Lösemittelgemisches, vorzugsweise eines unpolaren organisch-chemischen Lösemittels oder Lösemittelgemisches, und mindestens eines Emulgators und/oder Netzmittels

sowie

mehr als 59 Gew. %, vorzugsweise

mehr als 89 Gew. %

Wasser.

Gemäß einer vorteilhaften Ausführungsform der Erfindung ist im Mittel oder Konzentrat das Wirkstoffgemisch aus A) und B) (bezogen auf 100 Gew. % eingesetzte Wirkstoffe A) und B)) von 0 bis 50 Gew.%, vorzugsweise von 0,5 bis 25 Gew. % durch die gleiche Gewichtsmenge eines anderen Fungizids, vorzugsweise durch Tris-(N-cyclohexyl-diazeniumdioxy)-aluminium ersetzt.

Die Komponenten A) und B) der Werkstoffmischung können nach einer Ausführungsform auch in Form ihrer Salze eingesetzt werden.

Das Schnittholz wird mit dem erfindungsgemäßen Mittel oder Konzentrat derart behandelt, daß auf der Holzoberfläche

50 bis 4 g/m$^2$, vorzugsweise

12 bis 6 g/m$^2$

des Konzentrats aufgebracht werden.

**Beispiele**

1. Vergleichsbeispiele:

Stammscheibentest

| a) 2-Ethylhexansäure | Bläue | Schimmel |
|---|---|---|
| 7,6 g/m$^2$ | 0 | 0 |
| 4,0 g/m$^2$ | 3 | 3 |
| 1,9 g/m$^2$ | 5 | 5 |

| b) o-Phenylphenol | Bläue | Schimmel |
|---|---|---|
| 3,8 g/m$^2$ | 0-1 | 0-1 |
| 2,1 g/m$^2$ | 1 | 3-5 |
| 1,5 g/m$^2$ | 5 | 5 |

2. Erfindungsgemäße Beispiele

| Stammscheibentest | Konz % | Konz g/m$^2$ | Bläue | Schimmel |
|---|---|---|---|---|
| a) 10 % 2-Ethylhexansäure | 3,3 | 6,3 | 0-1 | 5 |
| 20 % o-Phenylphenol | 5,0 | 9,9 | 0 | 5 |
| | 6,7 | 12,0 | 0 | 3 |
| 50 % Aromaten<br>20 % Emulgator | in<br>H$_2$O | | | |

| | Konz % | Konz g/m$^2$ | Bläue | Schimmel |
|---|---|---|---|---|
| b) 20 % 2-Ethylhexansäure | 3,3 | 5,2 | 1 | 5 |
| 10 % o-Phenylphenol | 5,0 | 7,4 | 0 | 5 |
| 50 % Aromaten | 6,7 | 11,3 | 0 | 1-3 |
| | in | | | |
| 20 % Emulgator | H$_2$O | | | |

| | Konz % | Konz g/m$^2$ | Bläue | Schimmel |
|---|---|---|---|---|
| c) 15 % 2-Ethylhexansäure | 3 | 2,5 | 0 | 0 |
| 15 % o-Phenylphenol | 5 | 6,1 | 0 | 0 |
| 5 % N-CH-AL | 7 | 11,4 | 0 | 0 |
| 15 % Aromaten<br>25 % Triethanolamin<br>25 % Emulgator | in<br>H$_2$O | | | |
| N-CH-AL = Tris-(N-cyclohexyl-diazeniumdioxi)-aluminium | | | | |

Hierbei bedeuten:

```
Befallsgrad:   0  :        befallsfrei
               1  :        max. 10 % der Oberfläche befallen
               2  :        "    30 %        "          "
               3  :        "    50 %        "          "
               4  :        "    80 %        "          "
               5  :        "    total befallen
```

**Patentansprüche**

1. Mittel oder Konzentrat zum Schutz von Schnittholz gegen holzverfärbende Pilze, dadurch gekennzeichnet, daß es aus einer Mischung von

   A) o-Phenylphenol und
   B) 2-Ethylhexansäure

   in einem Verhältnis von

   10 : 1 bis 1 : 10, vorzugsweise
   1 : 1 bis 1 : 2,

   in einem unpolaren und/oder polaren organischchemischen Lösemittel oder Lösemittelgemisch, vorzugsweise in einem unpolaren organisch-chemischen Lösemittel oder Lösemittelgemisch und mindestens einen Emulgator und/oder Netzmittel gelöst oder in einem Gemisch von Wasser und einem organischchemischen Lösemittel oder Lösemittelgemisch, vorzugsweise einem unpolaren organisch-chemischen Lösemittel oder Lösemittelgemisch und mindestens einem Emulgator und/oder Netzmittel gelöst, besteht.

2. Konzentrat zum Schutz von Schnittholz gegen holzverfärbende Pilze nach Anspruch 1, dadurch gekennzeichnet, daß es aus

   5 bis 60 Gew. %, vorzugsweise
   20 bis 40 Gew. %

   des Gemisches von

   A) o-Phenylphenol und
   B) 2-Ethylhexansäure

   in einem Verhältnis von

   10 : 1 bis 1 : 10, vorzugsweise
   1 : 1 bis 1 : 2

   und

   mehr als 20 Gew. %, vorzugsweise
   mehr als 40 Gew. %

   eines unpolaren und/oder polaren organischchemischen Lösemittels oder Lösemittelgemisches, vorzugsweise eines unpolaren organisch-chemischen Lösemittels oder Lösemittelgemisches und minde-

EP 0 494 351 A1

stens eines Emulgators und/oder Netzmittels besteht.

3. Mittel zum Schutz von Schnittholz gegen holzverfärbende Pilze nach Anspruch 1, dadurch gekennzeichnet, daß das Mittel (anwendungsfertige Mittel)

40 bis 3 Gew. %, vorzugsweise
10 bis 5 Gew. %

des Konzentrats, bestehend aus

5 bis 60 Gew. %, vorzugsweise
20 bis 40 Gew. %

des Gemisches aus

A) o-Phenylphenol und
B) 2-Ethylhexansäure

in einem Verhältnis von

10 : 1 bis 1 : 10 , vorzugsweise
1 : 1 bis 1 : 2

und

mehr als 20 Gew. %, vorzugsweise
mehr als 40 Gew. %

eines unpolaren und/oder polaren organisch-chemischen Lösemittels oder Lösemittelgemisches, vorzugsweise eines unpolaren organisch-chemischen Lösemittels oder Lösemittelgemisches, und mindestens eines Emulgators und/oder Netzmittels,

sowie

mehr als 59 Gew. %, vorzugsweise
mehr als 89 Gew. %

Wasser, enthält.

4. Mittel oder Konzentrat zum Schutz von Schnittholz gegen holzverfärbende Pilze nach einem oder mehreren der Ansprüche 1 bis 3, dadurch gekennzeichnet, daß als unpolare organisch-chemische Lösemittel Mineralöle oder mineralölhaltige Lösungsmittelgemische, Testbenzin, Petroleum und/oder Alkylbenzol, vorzugsweise Aromatenfraktionen der Mineralöle eingesetzt werden.

5. Mittel oder Konzentrat zum Schutz von Schnittholz gegen holzverfärbende Pilze nach einem oder mehreren der Ansprüche 1 bis 4, dadurch gekennzeichnet, daß als polare organisch-chemische Lösemittel Hydroxyamine oder Amine eingesetzt werden.

6. Mittel oder Konzentrat zum Schutz von Schnittholz gegen holzverfärbende Pilze nach einem oder mehreren der Ansprüche 1 bis 5, dadurch gekennzeichnet, daß als Emulgatoren anionische Emulgatoren oder Emulgatorgemische sowie ggf. nichtionogene Emulgatoren oder Emulgatorgemische eingesetzt werden.

7. Mittel oder Konzentrat zum Schutz von Schnittholz gegen holzverfärbende Pilze nach Anspruch 6, dadurch gekennzeichnet, daß als anionische Emulgatoren Phosphorsäurepartialester und als nichtionogene Emulgatoren eine Seitengruppe enthaltende ethoxylierte Phenole eingesetzt werden.

6

8. Mittel oder Konzentrat zum Schutz von Schnittholz gegen holzverfärbende Pilze nach einem oder mehreren der Ansprüche 1 bis 7, dadurch gekennzeichnet, daß die Wirkstoffmischung aus A) und B) (bezogen auf 100 Gew.-% eingesetzte Wirkstoffe A) und B)) von 0 bis 50 Gew.-%, vorzugsweise 0,5 bis 25 Gew.-% durch die gleiche Gewichtsmenge eines anderen Fungizids, vorzugsweise durch Tris-(N-cyclohexyldiazeniumdioxi)-aluminium ersetzt ist.

9. Mittel oder Konzentrat zum Schutz von Schnittholz gegen holzverfärbende Pilze nach Ansprüchen 1 bis 8, dadurch gekennzeichnet, daß die Wirkstoffe A) und B) in Form ihrer Salze eingesetzt werden.

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | GB-A-2 052 265 (MANCHEM LTD.)<br>* Seite 1, Zeile 5 - Zeile 28 *<br>* Seite 1, Zeile 43 - Zeile 49; Ansprüche *<br>--- | 1-4,9 | B27K3/50<br>B27K3/38 |
| D,A | FR-A-2 523 404 (KYMI KYMMENE)<br>* Seite 1, Zeile 24 - Seite 2, Zeile 28; Ansprüche *<br>--- | 1-4,9 | |
| A | FR-E-56 477 (SOC. DES LABORATOIRES DE RECHERCHE POUR APPLIC. INDUST. "SOLAR")<br>* das ganze Dokument *<br>--- | 1-4 | |
| A | DE-B-1 042 796 (IMHAUSEN WERKE GMBH)<br>* das ganze Dokument *<br>--- | 1-4 | |
| A | US-A-4 380 561 (C-E. SUNDMAN ET AL)<br>* Ansprüche *<br>----- | 1-4,9 | |
| | | | **RECHERCHIERTE SACHGEBIETE (Int. Cl.5)**<br><br>B27K<br>A01N |

Der vorliegende Recherchenbericht wurde für alle Patentansprüche erstellt

| Recherchenort | Abschlußdatum der Recherche | Prüfer |
|---|---|---|
| DEN HAAG | 13 APRIL 1992 | FLETCHER A.S. |